# NOUVEAU FASCICULE DE BREVET EUROPEEN

(11) **EP 1 592 853 B2**
(45) Date de publication et mention de la décision concernant l'opposition: **02.10.2013**
(45) Mention de la délivrance du brevet: 23.04.2008
(21) Numéro de dépôt: 04707958.7
(22) Date de dépôt: 04.02.2004
(51) Int. Cl.: E04C 2/296, B32B 17/04

(54) **PANNEAU EN LAINE MINERALE DOTE D'UN VOILE RECOUVRANT LES DEUX FACES**
GLASFASER PANEL MIT BEIDSEITIGER GLASFASERMATTE
MINERAL WOOL PANEL COMPRISING A WEB WHICH COVERS BOTH FACES THEREOF

(30) Priorité: 04.02.2003 ES 200300264 U
(43) Date de publication de la demande: 09.11.2005
(73) Titulaire: SAINT-GOBAIN ISOVER, 92400 Courbevoie (FR)
(72) Inventeur: SORIANO, Hoyuelos, Esther, E-28029 Madrid (ES); NAVARRO NIEDERCORN, Gabriel, E-28037 Madrid (ES); COLOMA, Alberto, E-19005 Guadalajara (ES)
(74) Mandataire: Jamet, Vincent
(86) Numéro de dépôt international: PCT/FR2004/000269
(87) Numéro de publication internationale: WO 2004/072393

(56) Documents cités:
- WO-A1-03/095189
- WO-A2-02/066877
- CH-A5- 597 453
- DE-A- 3 519 752
- FR-A- 2 671 817
- FR-A1- 2 671 817
- GB-A- 1 061 277
- GB-A- 2 177 048
- US-A- 5 783 268
- US-A- 5 783 268
- TIPD92A000037 et abrégé en Anglais
- JP-A-64-049843 et abrégé en Anglais
- "Sandwich structured composite" (Wikipedia)
- Panneaux autoportants Climaver 284 (Isover)
- Knauf Eclipse Air Duct Board withe ECOSE Technology
- Thermal Batt Fiberglas Insulation par Owens Corning
- Building Insulation - Blown in Insulation System par Johns Manville
- Applicaciones de productos URSA par Ursa Uralita
- Déclaration de Mr. Carlos Rodero et Mme Esther Soriano Hoyuelos du 01-09-2010

## Description

### Domaine de l'invention

L'invention se rapporte au domaine des matériaux isolants à base de laine minérale et concerne plus particulièrement des matériaux destinés à la fabrication de conduits autoportants pour la distribution d'air de ventilation ou de climatisation.

### Objet de l'invention

La présente invention concerne un conduit d'air autoportant, fabriqué avec des panneaux en laine minérale dotés d'un voile recouvrant les deux faces, lequel confère des caractéristiques innovantes essentielles et des avantages notables par rapport aux moyens connus et utilisés à des fins similaires dans l'état actuel de la technique.

L'invention propose plus particulièrement la mise au point de conduits à partir de panneaux en laine minérale, de préférence mais pas exclusivement en laine de verre, du type de ceux utilisés pour la fabrication de conduits autoportants pour la distribution d'air climatisé, panneaux dotés d'un voile recouvrant les deux faces, préparé pour recevoir ultérieurement, par adhésion, d'autres revêtements quelconques prévus pour le panneau, dans lequel ledit voile recouvrant les deux faces donne lieu à une augmentation uniforme substantielle de la résistance structurale du panneau obtenu, en améliorant en conséquence le comportement du conduit dans lequel il est incorporé vis-à-vis des pressions tant positives que négatives.

Le domaine d'application de l'invention se situe, bien évidemment, dans le secteur industriel consacré à la fabrication de composants pour installations de conduite d'air, notamment d'air conditionné.

### Arrière-plan et résumé de l'invention

De façon connue de l'état de l'art, que la fabrication de conduits autoportants pour la distribution d'air conditionné au moyen de panneaux en laine minérale, notamment en laine de verre, constitue une pratique répandue et largement utilisée.

La réglementation espagnole RITE (Règlement des Installations Thermiques dans les Edifices) reprend, dans la section ITE 04.4, les conduits autoportants pour la distribution d'air réalisés en tôle métallique et en laine de verre.

Les panneaux en laine minérale, généralement en laine de verre, pour la construction de conduits sont constitués d'une âme en laine minérale, comprenant des fibres d'origine vitreuse agglomérées à des liants thermodurcissables, revêtue sur ses deux faces (les bords du panneau n'étant pas nécessairement revêtus). On précise que l'on entend ici par « faces » du panneau les faces principales de plus grande étendue.

D'une façon générale, les revêtements utilisés dans ces panneaux sont les suivants :
a) Face intérieure du conduit : Normalement, cette surface est revêtue d'un ensemble appelé "complexe", formé d'une pellicule d'aluminium et de papier kraft, collés ensemble, leur disposition, leur composition ou l'ordre des couches étant susceptibles de variation. Dans certains produits connus et disponibles sur le marché, on incorpore à l'âme du panneau, durant la fabrication de celui-ci, et sur la face destinée à l'intérieur du conduit, un voile de verre (tissu de fibres de verre non tissées) qui est par la suite revêtu dudit complexe. Il existe encore sur le marché des produits, de moins en moins utilisés, dont le revêtement de surface intérieur est constitué uniquement dudit voile, sans aucun complexe de revêtement supplémentaire.
   Ces différentes formes de revêtement ont toutes pour fonction d'éviter l'arrachement des fibres par la circulation d'air dans le conduit.
b) Face extérieure du conduit : Cette surface est toujours revêtue d'une couche métallique ou d'un ensemble appelé "complexe", formé d'une couche d'aluminium, de papier kraft et d'une maille de fibres de verre (la disposition, la composition ou l'ordre des couches sont susceptibles de variation).

On connaît en fait des panneaux de ce type dont l'âme peut incorporer un voile de fibres de verre uniquement sur une de ses faces, ladite face étant toujours disposée dans la partie correspondant à la surface interne du conduit, une fois formé. Ce voile peut rester à découvert à l'intérieur du conduit, ou peut être doté d'un revêtement.

A l'heure actuelle, on ne connaît pas sur le marché de panneaux utilisés pour la fabrication de conduits d'air incorporant sur l'âme en laine minérale un voile de fibres de verre ou de polymères organiques sur la face externe, de façon à ce que le revêtement ou complexe extérieur puisse adhérer directement à celle-ci.

Les panneaux en laine de verre pour la construction de conduits sont coupés et assemblés pour donner lieu à des réseaux de conduits pour la distribution d'air.

Dans la pratique, l'air est acheminé à l'intérieur des conduits formés par ces panneaux à une pression statique et dynamique déterminée. Par conséquent, du fait de la pression exercée par l'air à l'intérieur du conduit, celui-ci doit posséder une rigidité déterminée afin d'éviter sa déformation et la détérioration qui en résulte. Dans le but de garantir l'absence de déformations, les panneaux à partir desquels les conduits sont construits doivent présenter une certaine rigidité à la flexion, indépendamment des éléments de renforcement susceptibles d'être placés le long du conduit.

L'emploi de ces panneaux dans l'application concrète de la fabrication de conduits nécessite que cette résistance à la flexion, ou résistance à la déformation, s'exerce tant vis-à-vis des pressions positives (dilatation du conduit) que des pressions négatives (contraction ou diminution de la section intérieure du conduit). En définitive, le panneau doit présenter une résistance à la flexion dans les deux sens.

Comme on le sait, la rigidité d'un conduit de ce type peut être évaluée en fonction du module de Young et du moment d'inertie du panneau. De même, la rigidité d'un panneau à la flexion peut être évaluée à partir de la déformation qu'il présente lorsqu'il est soumis à son propre poids ou en charge.

Le niveau de rigidité souhaité est généralement obtenu par des améliorations apportées à l'âme du panneau (normalement constituée de laine minérale, généralement de laine de verre et des résines synthétiques qui l'agglomèrent). Ces améliorations consistent à traiter, ou à améliorer, le type de fibres de verre et le liant qui les unit, et également à augmenter la densité de l'ensemble formé par ces composants de l'âme du panneau, entre autres.

Même si les différentes couches de revêtement appliquées sur l'âme du panneau sont en théorie bénéfiques pour rigidifier le panneau, le gain de rigidité n'est pas significatif ou à tout le moins insuffisant en pratique pour donner au panneau une classe de rigidité supérieure, en raison de son comportement inégal qui dépend de la façon dont la pression s'exerce sur l'intérieur du conduit.

La présente invention s'est donné comme objectif principal de proposer un conduit d'air autoportant fabriqué avec des panneaux en laine minérale, de préférence en laine de verre, possédant des caractéristiques de rigidité structurale sensiblement améliorées. Cet objectif a été pleinement atteint au moyen du panneau en laine minérale objet de la description qui va suivre, et dont les caractéristiques principales sont reprises dans la revendication 1.

La présente invention propose essentiellement la formation d'un conduit d'air autoportant fabriqué à partir de panneaux qui se distinguent fondamentalement des autres panneaux connus du même type en ce qu'ils présentent la particularité d'être revêtus d'un voile sur les deux faces de l'âme qu'ils incorporent.

Il est apparu en effet que, pour un panneau qui incorpore un voile unique pour le revêtement du côté intérieur, la rigidité n'est pas uniforme du fait que le voile n'est présent que sur une seule face du conduit.

On obtient selon l'invention l'accroissement souhaité de la rigidité structurale du panneau grâce à l'augmentation de la rigidité superficielle et de la résistance à la traction conférée par les voiles des deux faces, ce qui permet d'obtenir des conduits de plus grande résistance tant vis-à-vis des pressions positives que des pressions négatives (conduits d'impulsion et de retour ou d'aspiration).

Conformément à l'invention, le voile est disposé sur chacune des faces ou surfaces de l'âme du panneau, et peut être réalisé à base de fibres de verre, de fibres de polymères organiques ou comporter des mélanges de fibres de polyester et de fibres de verre, tissées entre elles, ou non tissées et liées à l'aide d'un liant ou d'une résine synthétiques, et incorporer en plus, éventuellement, un renforcement constitué de fils. On obtient de cette manière un panneau hautement renforcé, de plus grande rigidité structurale et dont le comportement vis-à-vis des pressions positives ou négatives est sensiblement amélioré lors de son utilisation dans la construction de conduites pour des installations d'air conditionné.

### Brève description des dessins

Ces caractéristiques et avantages de l'invention, ainsi que d'autres, apparaîtront plus clairement à partir de la description détaillée qui suit d'une forme préférée de réalisation, donnée uniquement à titre d'exemple illustratif et non limitatif, en référence aux dessins joints, dans lesquels :

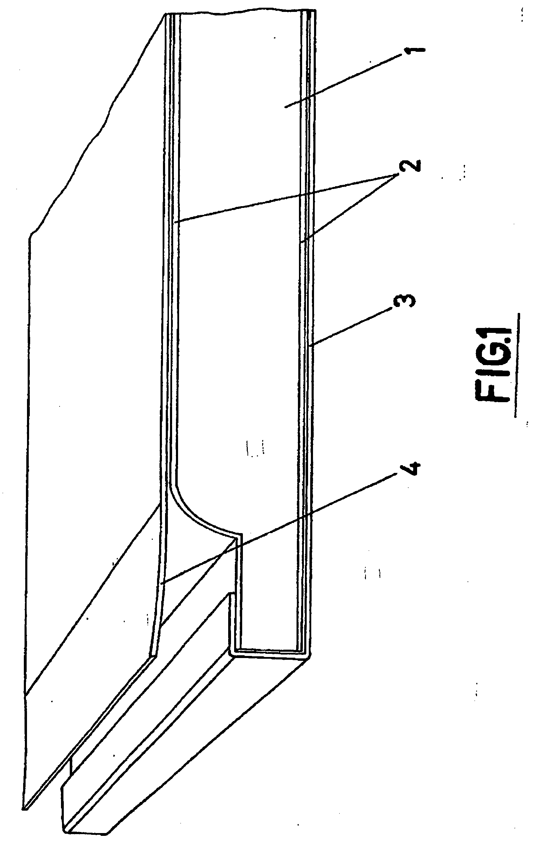

La Figure 1 montre une représentation schématique en perspective d'une portion de panneau en laine minérale construit selon les enseignements de la présente invention.

### Description d'une forme de réalisation préférée

Comme on l'a indiqué ci-dessus, la description détaillée de la forme de réalisation préférée du panneau utilisé pour la fabrication des conduits de l'invention va se faire, dans la suite, à l'aide du dessin annexé. En ce sens, l'unique Figure montre une représentation schématique d'une vue en perspective d'un panneau de l'invention, dans lequel on distingue une âme 1 en laine minérale, dont les surfaces intérieure et extérieure sont susceptibles de recevoir, selon l'invention, un voile 2 sur chacune d'elles, solidaire desdites surfaces, lesdits voiles se prolongeant sur la totalité desdites surfaces respectives, les revêtements 3, 4 souhaités pouvant être appliqués sur la face extérieure.

Chacun des voiles 2 incorporés sur les surfaces intérieure et extérieur de l'âme du panneau est constitué d'une multiplicité de fibres de verre ou de fibres de polymères organiques, tissées ou non tissées. Les matériaux de fabrication desdits voiles 2 peuvent également comporter avantageusement un mélange de fibres de polymère (notamment polyester) et de fibres de verre.

A titre d'illustration, on indique que le grammage d'un voile utile selon l'invention peut être de l'ordre de 30 à 50 g/m², de préférences 35 à 40 g/m².

Lorsqu'il s'agit de fibres de verre, i peut s'agir de fibres de laine minérale obtenues par étirage en flux gazeux de filaments de verre ou de fils de verre textile coupés.

De façon générale, les voiles en particulier non tissés peuvent comprendre des fibres liées entre elles à l'aide d'un liant ou d'une résine synthétiques.

Les fibres composant les voiles, tissées ou non tissées, peuvent comporter des fils de renforcement qui peuvent être des fils naturels ou synthétiques, notamment des fils de polymères ou des fils de verre obtenus par étirage/enroulement de filaments de verre.

La fixation des voiles 2 sur l'âme 1 en laine minérale (de préférence, en laine de verre) se fait au cours du même procédé de production de cette dernière, préalablement au passage des liants synthétiques dans l'étuve de polymérisation, lesquels sont appelés à se mélanger aux fibres vitreuses de la laine minérale. L'adhésion des voiles 2 à l'âme 1 se fait normalement à l'aide du même type de liant synthétique qui agglomère les fibres composant la laine minérale. De cette façon, les laines minérales comportant le liant synthétique qui ne s'est pas encore polymérisé, sont disposées entre deux surfaces de voile du type décrit, à la façon d'un "sandwich". Ledit sandwich de laine minérale comprenant de chaque côté un voile 2 est introduit dans l'étuve, dans laquelle le liant se polymérise sous l'action de la chaleur, de façon à unir entre elles les parties de ce sandwich et à former ainsi un ensemble qui prend le format d'un panneau rigide. Ce mode d'incorporation des voiles 2 à l'âme 1 en laine minérale assure l'union intime desdits éléments, en offrant l'avantage d'accroître la rigidité de l'âme 1, laquelle est bien supérieure à celle que procureraient les mêmes voiles s'ils étaient collés de façon différente.

Par conséquent, le panneau est finalement configuré selon un ordre allant de la face la plus intérieure au contact de l'air circulant dans le conduit fabriqué à partir de ces panneaux et s'établissant comme suit :
- Revêtement 3 intérieur : celui-ci est formé d'une multicouche complexe dont la configuration la plus classique, mais non exclusive, comprend l'incorporation d'une pellicule d'aluminium et de papier kraft ;
- Ame 1 du panneau : constituée d'un corps formé de laine minérale, notamment de laine de verre d'une densité déterminée, sur les faces extérieure et extérieure de laquelle est incorporé un voile 2 réalisé à base de fibres de verre ou de polymères organiques, ou d'une combinaison des deux ;
- Revêtement 4 extérieur : celui-ci est formé d'un complexe multicouche, dont la configuration la plus classique, mais non exclusive, comprend l'utilisation d'une pellicule d'aluminium, d'un treillis de fils de verre et de papier kraft.

La composition du panneau permet d'obtenir des améliorations affectant, en particulier, les propriétés requises de la part de ce type de panneaux en vue de son utilisation dans la construction de conduites d'air conditionné, notamment en ce qui concerne sa rigidité à la flexion. Cette augmentation de la rigidité offre deux avantages fondamentaux, à savoir, la résistance à la dilatation ou à la déformation du conduit fabriqué à partir des panneaux améliorés, et la résistance à la flexion des panneaux de grandes dimensions (autour de 3 mètres de long, avec une épaisseur de 2,5 cm), durant la manipulation et le transport avant la fabrication en série des conduits. La réduction du risque de pliage en deux des panneaux, qui empêche l'utilisation du panneau dans la zone du pliage (gaspillage de matériau), constitue également un avantage important, tant du point de vue de la manipulation que des coûts d'installation.

Par ailleurs, du fait que d'habitude, pour augmenter la rigidité du panneau, on fait normalement appel à un accroissement de la densité de l'âme 1 du panneau ou de sa teneur en liants synthétiques, l'incorporation du voile 2 sur les deux faces de l'âme 1 des panneaux permet de réduire ces critères pour obtenir néanmoins les mêmes résultats, voire des rendements supérieurs. Cette réduction de la densité peut atteindre des pourcentages excédant 5 %, ou, en variante, il est possible de diminuer la teneur en liant, avec des réductions de plus de 2 points par rapport à la valeur en pour cent utilisée dans les panneaux équivalents qui n'incorporent pas les améliorations proposées (par exemple, passer d'un taux de liants de 12 % à un taux inférieur à 10 %). Ces réductions aboutissent à une diminution des coûts du procédé de production. Ainsi, si l'on compare deux panneaux à savoir un premier panneau de type conventionnel n'incorporant pas de voile sur les deux faces, et un deuxième panneau construit conformément à l'invention, autrement dit doté d'un voile sur les deux faces, le résultat obtenu est que, à rigidité structurale égale, le panneau conforme à l'invention présente une densité représentant environ 95 % de la densité du premier panneau.

Le tableau ci-dessous présente les résultats de mesures de flèche conformément à la norme EN13403 sur un panneau selon l'invention et à titre comparatif sur un panneau dépourvu de voiles. On constate un niveau de rigidité équivalent avec une densité considérablement réduite selon l'invention.

| Exemple | Selon l'invention | Comparatif |
|---|---|---|
| Nombre de voiles | 2 | 0 |
| Densité (kg/m³) | 72 | 82 |
| Flèche (mm) | 19 | 20 |

Par ailleurs, le fait d'incorporer, selon l'invention, le voile 2 sur la face extérieure de l'âme 1 du panneau permet d'accroître également la résistance du panneau au poinçonnement, une fois que celui-ci a été revêtu sur cette face. On peut tirer parti de cet avantage pour réduire les revêtements ou complexes 3, 4 que l'on fait adhérer par la suite à l'âme 1, dans la mesure où les sollicitations auxquelles ils sont soumis diminueront du fait de la contribution dudit voile 2 à la résistance mécanique de l'ensemble. Une partie des réductions susceptibles d'être appliquées à ces complexes affectent donc le grammage des composants organiques qu'ils contiennent, ce qui conduit à une amélioration du comportement au feu du revêtement extérieur et du produit dans son ensemble.

Dans le cas de l'utilisation du voile 2 sur la face extérieure de l'âme 1 du panneau, selon l'invention, on obtient une surface plus lisse, permettant d'y faire adhérer par la suite des revêtements (complexes) en utilisant moins d'adhésif ou de colle, d'où une amélioration du comportement du produit et du revêtement au feu, et ce en relation avec des essais sur ladite caractéristique réalisés dans des laboratoires indépendants.

## Revendications

1. Conduit d'air autoportant, en particulier d'air conditionné, fabriqué avec des panneaux en laine minérale de rigidité structurale accrue composés d'une âme centrale en laine minérale, notamment en laine de verre, revêtue sur les deux faces de revêtements, ladite âme incorporant un voile sur la face située à l'intérieur de la conduite obtenue, le panneau de l'invention étant **caractérisé en ce qu'**il comprend une âme (1) dont les deux faces superficielles, tant la face intérieure que la face extérieure, incorporent chacune un voile (2) respectif, s'étendant sur la totalité de celles-ci, les deux voiles (2) étant liés aux surfaces de l'âme (1) à l'aide de liants polymérisables sous l'action de la chaleur.

2. Conduit d'air selon la revendication 1, **caractérisé en ce que** ledit voile (2) recouvrant chaque face de l'âme (1) est composé de fibres de verre ou de fibres de polymères organiques, liées entre elles à l'aide d'un liant ou d'une résine synthétiques, ou, le cas échéant, d'un mélange de fibres de polymère et de fibres de verre.

3. Conduit d'air selon la revendication 2, **caractérisé en ce que** les fibres composant les voiles (2) comprennent des fibres tissées et/ou non tissées.

4. Conduit d'air selon l'une quelconque des revendications 2 ou 3, **caractérisé en ce que** les fibres composant les voiles (2), tissées ou non tissées, comportent des fils de renforcement.

5. Conduit d'air selon une ou plusieurs des revendications précédentes, **caractérisé par** une résistance accrue à la dilatation ou à la déformation, et également par une augmentation sensible de la résistance au poinçonnement par comparaison avec les panneaux revêtus sur une seule face.

## Patentansprüche

1. Selbsttragende Luftleitung, insbesondere für Klimatisierungsluft, die hergestellt ist aus Mineralwolleplatten mit erhöhter Struktursteifigkeit, die sich aus einem mittigen Kern aus Mineralwolle, speziell Glaswolle, der auf beiden Seiten mit Beschichtungen überzogen ist, zusammensetzen, wobei der Kern auf der im Inneren der erhaltenen Leitung befindlichen Seite ein Flächengebilde umfasst und die erfindungsgemäße Platte **dadurch gekennzeichnet ist, dass** sie einen Kern (1) umfasst, dessen beide Oberflächenseiten, sowohl die Innenseite als auch die Außenseite, jeweils ein Flächengebilde (2) umfassen, das sich über ihre Gesamtheit erstreckt, und die zwei Flächengebilde (2) mit den Oberflächen des Kerns (1) mittels unter Wärmeeinwirkung polymerisierbarer Bindemittel verbunden sind.

2. Luftleitung nach Anspruch 1, **dadurch gekennzeichnet, dass** das Flächengebilde (2), das jede Seite des Kerns (1) bedeckt, sich aus Glasfasern oder organischen Polymerfasern, die untereinander mittels eines Bindemittels oder eines synthetischen Harzes verbunden sind, oder gegebenenfalls aus einem Gemisch aus Polymerfasern und Glasfasern zusammensetzt.

3. Luftleitung nach Anspruch 2, **dadurch gekennzeichnet, dass** die die Flächengebilde (2) bildenden Fasern verwebte und/oder nicht verwebte Fasern umfassen.

4. Luftleitung nach Anspruch 2 oder 3, **dadurch gekennzeichnet, dass** die verwebten oder nicht verwebten Fasern, welche die Flächengebilde (2) bilden, Verstärkungsfäden enthalten.

5. Luftleitung nach einem oder mehreren der vorhergehenden Ansprüche, **dadurch gekennzeichnet, dass** sie eine erhöhte Widerstandsfähigkeit gegenüber Ausdehnung oder Verformung und auch eine beträchtliche Erhöhung des Widerstands gegenüber Durchstoßen im Vergleich mit auf einer einzigen Seite beschichteten Platten besitzt.

## Claims

1. A Self-supporting air duct, particularly air conditioning duct, manufactured with mineral wool panels of increased structural strength, which are composed of a central core made of mineral wool, especially glass wool, coated on both faces with coatings, said core incorporating a web on the face located on the inside of the duct obtained, the panel of the invention being **characterized in that** it comprises a core (1) the two surface faces of which, both the inner face and the outer face, each incorporate a respective web (2) extending over the totality of said faces, the two webs (2) being bonded to the surfaces of the core (1) by means of binders that can cure through the action of heat.

2. An air duct as claimed in claim 1, **characterized in that** said web (2) covering each face of the core (1) is composed of glass fibers or organic polymer fibers, these being bonded together by means of a synthetic binder or a synthetic resin, or, where appropriate, of a mixture of polymer fibers and glass fibers.

3. An air duct as claimed in claim 2, **characterized in that** the fibers making up the webs (2) comprise woven and/or nonwoven fibers.

4. An air duct as claimed in either of claims 2 and 3, **characterized in that** the fibers making up the woven or nonwoven webs (2) include reinforcing yarns.

5. An air duct as claimed in one or more of the preceding claims, **characterized by** an increased resistance to expansion or to deformation and also by a substantial increase in the puncture resistance compared to the panels coated on only one face.
